# EUROPEAN PATENT SPECIFICATION

(11) **EP 3 434 595 B1**
(45) Date of publication and mention of the grant of the patent: **10.03.2021**
(21) Application number: 18183708.9
(22) Date of filing: 16.07.2018
(51) Int. Cl.: B64D 27/02, B64D 27/14

(54) **ADAPTER RING FOR ABOVE-WING MOUNTING OF BELOW-WING ENGINE**
ADAPTERRING ZUR MONTAGE EINES UNTERFLÜGELMOTORS AUF EINEM FLÜGEL
ANNEAU D'ADAPTATEUR ASSURANT LE MONTAGE D'UN MOTEUR DE TYPE SOUS- AILE AU-DESSUS D'UNE AILE

(30) Priority: 28.07.2017 US 201715662318
(43) Date of publication of application: 30.01.2019
(73) Proprietor: United Technologies Corporation, Farmington, CT 06032 (US)
(72) Inventor: SUCIU, Gabriel L., Glastonbury, CT 06033 (US); CHANDLER, Jesse M., South Windsor, CT 06074 (US)
(74) Representative: Dehns

(56) References cited:
- US-A- 6 126 110
- US-A1- 2006 038 066
- US-A1- 2014 021 292
- US-B1- 6 401 448

## Description

### BACKGROUND

The present disclosure relates to an engine mounting configuration, and more particularly to an engine mounting configuration for mounting a gas turbine engine above an aircraft.

A gas turbine engine may be mounted at various points on an aircraft such as a pylon integrated with an aircraft structure. An engine mounting configuration ensures the transmission of loads between the engine and the aircraft structure. The loads typically include the weight of the engine, its thrust, aerodynamic loads, maneuver loads, and rotary torque about the engine axis. The engine mounting configuration must also absorb the deformations to which the engine is subjected during different flight phases and the dimensional variations due to thermal expansion and retraction.

Gas turbine engines are traditionally mounted to pylons in an under-wing configuration, in which the engines are situated beneath the aircraft wings. One conventional engine mounting configuration includes a pylon having a front mount and a rear mount. The front mount handles vertical and side loads from the front of the engine. Thrust loads are typically reacted at the intermediate case. The rear mount handles vertical, side, and torque loads.

US 6 401 448 B1 discloses a prior art gas turbine engine mount arrangement as set forth in the preamble of claim 1.

### SUMMARY

A gas turbine engine mount arrangement is provided according to claim 1.

In an embodiment of the foregoing embodiment, the first end of the at least one thrust link is pivotally mounted to the gas turbine engine, and the second end of the at least one thrust link is pivotally mounted to the adapter ring.

In a further embodiment of any of the foregoing embodiments, the second end of the at least one thrust link is situated radially outward of the first end of the at least one thrust link.

In a further embodiment of any of the foregoing embodiments, each A-frame support includes a triangular opening between its legs and the mounting plate.

In a further embodiment of any of the foregoing embodiments, the respective A-frame supports circumferentially curve along an outer surface of the gas turbine engine.

In a further embodiment of any of the foregoing embodiments, the legs extend away from one another at an angle from 15° to 25°.

In a further embodiment of any of the foregoing embodiments, the adapter ring mounts to the at least one thrust link above the gas turbine engine at a first axial location, and the adapter ring mounts to the gas turbine engine beneath the gas turbine engine at a second axial location that is aft of the first axial location.

In a further embodiment of any of the foregoing embodiments, the gas turbine engine includes a fan and a fan casing surrounding the fan, a band on an outer periphery of the fan casing, and a front mount operable to mount a bottom of the band to the aircraft at a third axial location that is fore of the first and second axial locations.

In a further embodiment of any of the foregoing embodiments, the at least one thrust link has a pair of thrust links that are spaced apart from one another, the second end of each thrust link mounted to opposing ends of a whiffle tree, the whiffletree including a central passage intermediate of its opposing ends, the whiffletree pivotally mounted to the adapter ring through its central passage.

There is further provided an aircraft according to claim 10.

In a further embodiment of any of the foregoing embodiments, the mount arrangement includes a whiffletree having opposing ends, each opposing end mounted to the second end of a respective one of the thrust links. Each whiffletree includes a central passage intermediate of its opposing ends. Each whiffletree is pivotally mounted to the adapter ring through the central passage.

The embodiments, examples, and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### BRIEF DESCRIPTION OF THE DRAWINGS

Figure 1 is a schematic view of an example gas turbine engine.
Figure 2 shows an aircraft design with an above-wing engine mount.
Figure 3 illustrates an example above-wing mounting configuration for a gas turbine engine.
Figure 4 illustrates a perspective view of the mounting configuration of Figure 3.
Figure 5 illustrates an example whiffletree for the mounting configuration of Figure 3 taken along line B-B of Figure 3.

### DETAILED DESCRIPTION

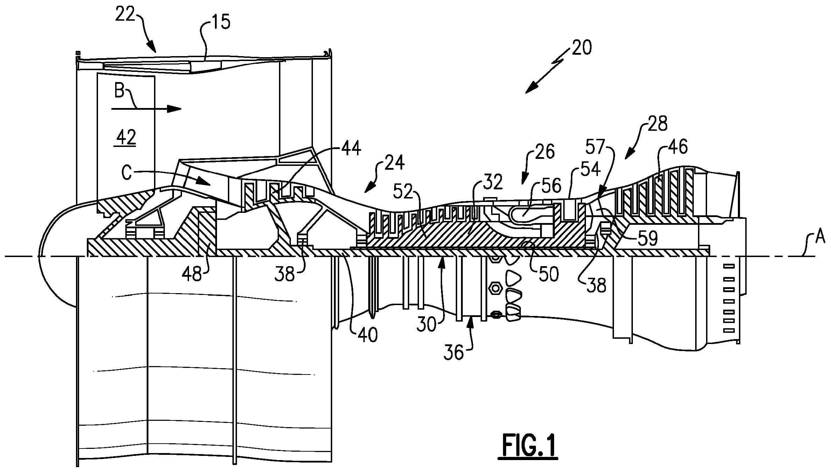

Figure 1 schematically illustrates a gas turbine engine 20. The gas turbine engine 20 is disclosed herein as a two-spool turbofan that generally incorporates a fan section 22, a compressor section 24, a combustor section 26, and a turbine section 28. Alternative engines might include an augmentor section (not shown) among other systems or features. The fan section 22 drives air along a bypass flow path B in a bypass duct defined within fan case / duct 15, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 1150 ft / second (350.5 meters/second).

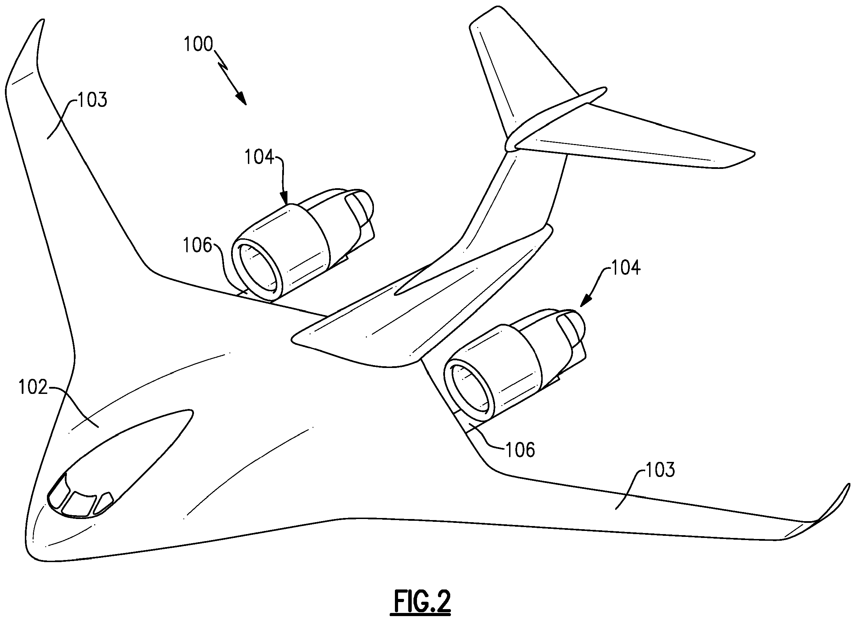

Figure 2 shows an aircraft 100 having a wide fuselage 102. The lateral dimension, or width, of the fuselage 102 is much greater than a height, or vertical dimension. In the example aircraft 100, the fuselage 102 merges with the wings 103 of the aircraft 100. Twin gas turbine engines 104 are mounted to pylons 106. Although pylons typically extend from aircraft wings, the example pylons 106 in Figure 2 extend from a combined fuselage / wing trailing edge location. The gas turbine engines 104 are two of the gas turbine engine 20 of Figure 1 in some examples. Of course, other propulsors could be used instead for the gas turbine engines 104. As depicted in Figure 2, the gas turbine engines 104 are mounted above the pylons 106 in an "above-wing" configuration.

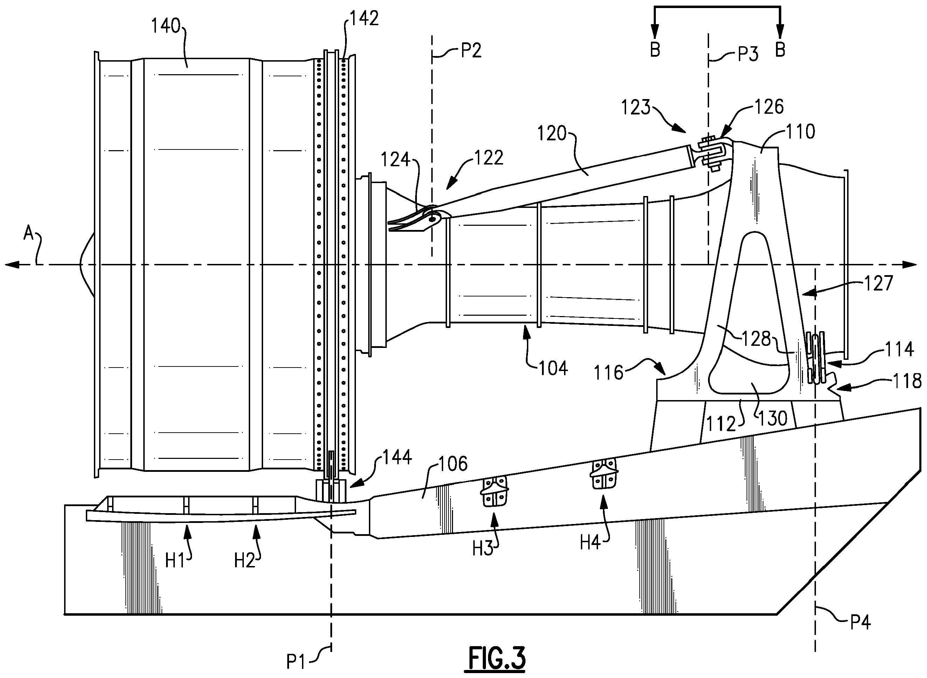

Figure 3 illustrates an example above-wing mounting configuration that may be used for mounting the gas turbine engines 104 to the aircraft 100 depicted in Figure 2. An adapter ring 110 extends circumferentially around the gas turbine engine 104 and is mounted to both the gas turbine engine 104 and to an aircraft (e.g., a pylon 106 of aircraft 100) beneath the gas turbine engine 104. The adapter ring 110 includes a mounting plate 112 situated beneath the gas turbine engine 104 that mounts the adapter ring 110 to the pylon 106 through one or both of its feet 116, 118. The adapter ring 110 mounts to the gas turbine engine 104 through a rear mount 114 at axial position P4.

In one non-limiting example, the adapter ring 110 extends around the high pressure turbine 54 and/or low pressure turbine 46 of the gas turbine engine 20.

A pair of thrust links 120 (of which one is depicted in Figure 3) extend between a first end 122 and an opposing second end 123. The first ends 122 of the thrust links 120 are pivotally mounted to respective support arms 124 situated on opposing sides of the gas turbine engine 104 at axial position P2. The opposite second ends 123 of the thrust links 120 are pivotally mounted to respective support arms 126 of the adapter ring 110 at axial position P3, which is aft of axial position P2, and fore of axial position P4. The first ends 122 are situated radially inward of the second ends 123.

The adapter ring 110 defines respective A-frame supports 127 situated on opposing sides of the gas turbine engine 104. Each A-frame support 127 has legs 128 having first ends that extend towards one another and towards a top of the gas turbine engine 104, and opposing second ends that extend away from one another and towards a bottom of the gas turbine engine 104 and join the mounting plate 112. As used herein, the legs 128 "joining" the mounting plate 112 means that the legs 128 are either integrally formed with the mounting plate 112 as a single-piece component or are separately formed from the mounting plate 112 and are subsequently joined to the mounting plate (e.g., through welding and/or use of fasteners).

In one example, the legs 128 extend away from one another at an angle from 10° to 30° (i.e., greater than or equal to 10° and less than or equal to 30°). In a further example, the legs 128 extend away from one another at an angle from 15° to 25°. In a further example, the legs 128 extend away from one another at an angle of approximately 20°.

In the example of Figure 3, each A-frame support 127 has a triangular opening 130 between its legs 128 and the mounting plate 112, which minimizes a weight of the adapter ring 110. This is an optional feature though, and the opening 130 could be omitted if desired.

The gas turbine engine 104 includes a fan (e.g., fan 42 of Figure 1) that is surrounded by a fan casing 140. A band 142 is disposed on an outer periphery of the fan casing 140. A front mount 144 mounts a bottom of the band 142 to the pylon 106 at an axial position P1. Axial position P1 is fore of axial positions P2-P4.

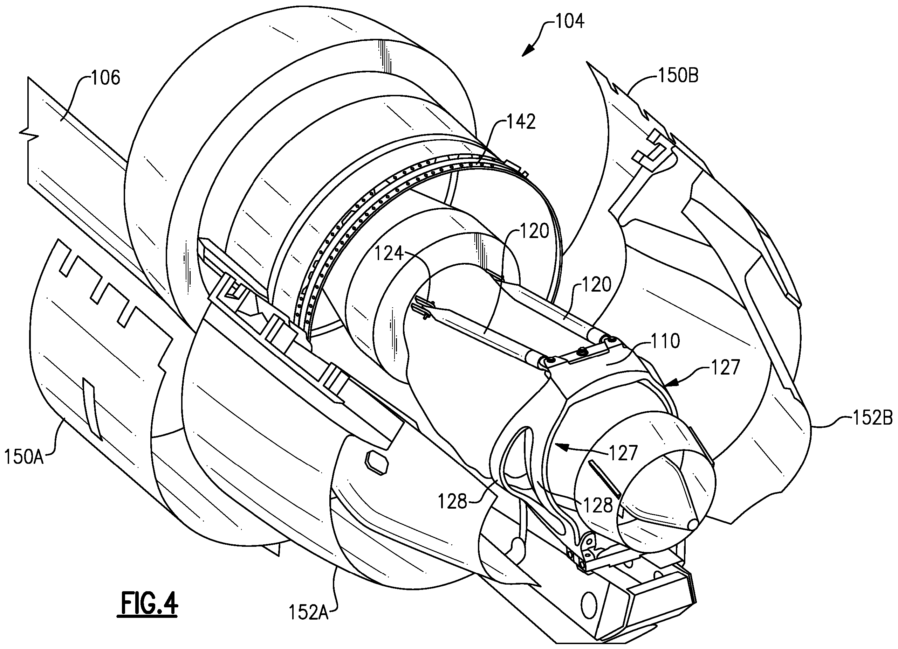

Figure 4 illustrates a perspective view of the mounting configuration of Figure 3. As shown in Figure 4, the pair of thrust links 120 are circumferentially spaced apart from one another. Figure 4 depicts how nacelle doors 150A-B, which engage one another above the gas turbine engine 104 when closed, can be opened away from each other through hinged connections at hinge locations H1, H2 on the pylon 106 beneath the gas turbine engine 104 (see Figure 3). Figure 4 also depicts how nacelle doors 152A-B, which are aft of nacelle doors 150A-B, and which also engage one another above the gas turbine engine 104 when closed, can be opened away from one another through hinged connections at hinge locations H3, H4 on the pylon 106 beneath the gas turbine engine 104 (see Figure 3). As shown in Figure 4, the respective A-frame supports 127 circumferentially curve along an outer surface of the gas turbine engine 104.

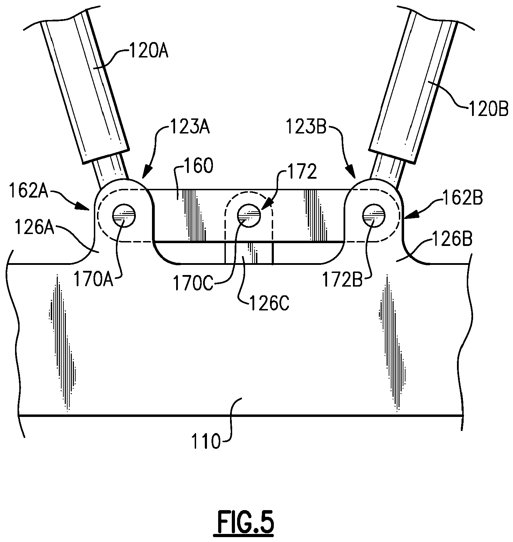

Figure 5 illustrates an example whiffletree 160 for the mounting configuration of Figure 3 taken along line B-B of Figure 3. The whiffletree 160 includes opposing ends 162A-B. Each end 123A-B of a respective thrust link 120A-B is mounted to a respective opposing end 162A-B of the whiffletree 160. Fastener 170A extends through outer support arm 126A of the adapter ring 110, end 162A of whiffletree 160, and end 123A of thrust link 120A. Similarly, fastener 170B extends through outer support arm 126B of the adapter ring 110, end 162B of whiffletree 160, and end 123B of thrust link 120B.

The adapter ring 110 includes a middle support arm 126C situated between the outer support arms 126A-B. A fastener 170C extends through a central opening 172 of the whiffletree 160, and through the middle support arm 126, and permits some pivoting of the whiffletree 160 to ensure that a thrust load of the gas turbine engine 104 is evenly distributed between the thrust links 120A-B.

It is non-trivial to simply mount a traditionally under-wing gas turbine engine in an above-wing configuration. If one were to simply rotate the gas turbine engine 20 of Figure 2 along with conventional forward and rear mounts and thrust links 180°, the engine 20 may not function as desired because components such as oil lines and bearing compartments are in some instances designed in such a way that they cannot just be flipped upside down. Nor can one simply rotate the conventional forward and rear mounts and thrust links 180° and still use them with an un-rotated engine 20 because externals, such as electronics and conduits for fuel and/or hydraulic fluid, are tightly packed around conventional thrust links, and such a rotation would require extensive reconfiguration of the engine externals packaging.

The gas turbine engine 104 mounting configuration features discussed above provide a useful solution for mounting a traditionally under-wing gas turbine engine in an above-wing configuration. The introduction of the adapter ring 110 allows the gas turbine engine 20 to use front mount 144 and rear mount 114, which are situated below the gas turbine engine 20, because the adapter ring 110 handles the thrust load through its mounting to the thrust links 120 above the gas turbine engine 20, while mounting to the pylon 106 beneath the gas turbine engine 20. This configuration also allows the gas turbine engine 104 to rotate a traditional nacelle structure that would otherwise be hinged above a gas turbine engine 180° to use below-engine nacelle door hinge locations H1, H2, H3, H4.

Although traditionally under-wing engines have been discussed above, it is understood that the mounting configuration features discussed herein are not limited to traditionally under-wing engines, and could also be applied to different propulsors, including some designed for entirely above-wing mounting.

It should be understood that terms such as "above," "top," "beneath," "bottom," "fore," "aft," "axial," "radial," and "circumferential" are used above with reference to the normal operational attitude of the gas turbine engine 20. Further, these terms have been used herein for purposes of explanation, and should not be considered otherwise limiting. Terms such as "generally," "substantially," and "about" are not intended to be boundaryless terms, and should be interpreted consistent with the way one skilled in the art would interpret those terms

Although example embodiments have been disclosed, a worker of ordinary skill in this art would recognize that certain modifications would come within the scope of this disclosure. For that reason, the following claims should be studied to determine the scope and content of this disclosure.

## Claims

1. A gas turbine engine mount arrangement comprising:
a gas turbine engine (104);
an adapter ring (110) extending circumferentially around the gas turbine engine (104) and mounted to both the gas turbine engine (104) and to an aircraft (100) beneath the gas turbine engine (104); and
at least one thrust link (120) comprising a first end (122) mounted to the gas turbine engine (104) fore of the adapter ring (110), and an opposite second end (123) mounted to the adapter ring (110) above the gas turbine engine (104);
**characterised in that** the adapter ring (110) comprises a mounting plate (112) situated beneath the gas turbine engine (104) that mounts the adapter ring (110) to the aircraft (100), and respective A-frame supports (127) situated on opposing sides of the gas turbine engine (104), each A-frame support (127) comprising legs (128) having first ends that extend towards one another and towards a top of the gas turbine engine (104), and opposing second ends that extend away from one another and towards a bottom of the gas turbine engine (104), wherein the second ends of the legs (128) join the mounting plate (112).

2. The gas turbine engine mount arrangement of claim 1, wherein the first end (122) of the at least one thrust link (120) is pivotally mounted to the gas turbine engine (104), and the second end (123) of the at least one thrust link (120) is pivotally mounted to the adapter ring (110).

3. The gas turbine engine mount arrangement of claim 1 or 2, wherein the second end (123) of the at least one thrust link (120) is situated radially outward of the first end (122) of the at least one thrust link (120).

4. The gas turbine engine mount arrangement of claim 1, 2 or 3, wherein each A-frame support (127) comprises a triangular opening (130) between its legs (128) and the mounting plate (112).

5. The gas turbine engine mount arrangement of any preceding claim, wherein the respective A-frame supports (127) circumferentially curve along an outer surface of the gas turbine engine (104).

6. The gas turbine engine mount arrangement of any preceding claim, wherein the legs (128) extend away from one another at an angle from 15° to 25°.

7. The gas turbine engine mount arrangement of any preceding claim, wherein the adapter ring (110) mounts to the at least one thrust link (120) above the gas turbine engine (104) at a first axial location (P3), and the adapter ring (110) mounts to the gas turbine engine (104) beneath the gas turbine engine (104) at a second axial location (P4) that is aft of the first axial location (P3).

8. The gas turbine engine mount arrangement of claim 7, the gas turbine engine (104) comprising:
a fan (42) and a fan casing (140) surrounding the fan (42);
a band (142) on an outer periphery of the fan casing (140); and
a front mount (144) operable to mount a bottom of the band (142) to the aircraft (100) at a third axial location (P1) that is fore of the first and second axial locations (P3, P4).

9. The gas turbine engine mount arrangement of any preceding claim, wherein the at least one thrust link (120) comprises a pair of thrust links (120A, 120B) that are spaced apart from one another, the second end (123A, 123B) of each thrust link (120A, 120B) mounted to opposing ends (162A, 162B) of a whiffle tree (160), the whiffletree (160) comprising a central passage (172) intermediate of its opposing ends (162A, 162B), the whiffletree (160) pivotally mounted to the adapter ring (110) through its central passage (172).

10. An aircraft (100) comprising:
a fuselage (102); and
the gas turbine engine mount arrangement of any of claims 1 to 8, wherein the gas turbine engine (104) is mounted above said fuselage (102), the adapter ring (110) is mounted to the fuselage (102) beneath the gas turbine engine (104), and the at least one thrust link (120) comprises a pair of thrust links (120A, 120B) that are spaced apart from one another.

11. The aircraft (100) of claim 10, wherein the gas turbine engine mount arrangement comprises a whiffletree (160) having opposing ends (162A, 162B), each opposing end (162A, 162B) mounted to the second end (123A, 123B) of a respective one of the thrust links (120A, 120B), the whiffletree (160) comprising a central passage (172) intermediate of its opposing ends (162A, 162B), and the whiffletree (160) pivotally mounted to the adapter ring (110) through the central passage (172).

## Patentansprüche

1. Gasturbinentriebwerksmontageanordnung, umfassend:
ein Gasturbinentriebwerk (104);
einen Adapterring (110), der sich in Umfangsrichtung um das Gasturbinentriebwerk (104) erstreckt und sowohl an dem Gasturbinentriebwerk (104) als auch an einem Luftfahrzeug (100) unterhalb des Gasturbinentriebwerks (104) montiert ist; und
mindestens ein Schubgestänge (120), das ein erstes Ende (122), das an dem Gasturbinentriebwerk (104) vor dem Adapterring (110) montiert ist, und ein gegenüberliegendes zweites Ende (123) umfasst, das an dem Adapterring (110) über dem Gasturbinentriebwerk (104) montiert ist;
**dadurch gekennzeichnet, dass** der Adapterring (110) eine Montageplatte (112), die unter dem Gasturbinentriebwerk (104) angeordnet ist und die den Adapterring (110) an dem Luftfahrzeug (100) montiert, und jeweilige A-Rahmen-Stützen (127), die an gegenüberliegenden Seiten des Gasturbinentriebwerks (104) angeordnet sind, umfasst, wobei jede A-Rahmen-Stütze (127) Schenkel (128) umfasst, die erste Enden, die sich zueinander und zu einer Oberseite des Gasturbinentriebwerks (104) erstrecken, und gegenüberliegende zweite Enden aufweisen, die sich voneinander weg und zu einer Unterseite des Gasturbinentriebwerks (104) erstrecken, wobei sich die zweiten Enden der Schenkel (128) mit der Montageplatte (112) verbinden.

2. Gasturbinentriebwerksmontageanordnung nach Anspruch 1, wobei das erste Ende (122) des mindestens einen Schubgestänges (120) schwenkbar an dem Gasturbinentriebwerk (104) montiert ist und das zweite Ende (123) des mindestens einen Schubgestänges (120) schwenkbar an dem Adapterring (110) montiert ist.

3. Gasturbinentriebwerksmontageanordnung nach Anspruch 1 oder 2, wobei das zweite Ende (123) des mindestens einen Schubgestänges (120) radial auswärts des ersten Endes (122) des mindestens einen Schubgestänges (120) angeordnet ist.

4. Gasturbinentriebwerksmontageanordnung nach Anspruch 1, 2 oder 3, wobei jede A-Rahmen-Stütze (127) eine dreieckige Öffnung (130) zwischen ihren Schenkeln (128) und der Montageplatte (112) umfasst.

5. Gasturbinentriebwerksmontageanordnung nach einem der vorstehenden Ansprüche, wobei sich die jeweiligen A-Rahmen-Stützen (127) in Umfangsrichtung entlang einer Außenfläche des Gasturbinentriebwerks (104) krümmen.

6. Gasturbinentriebwerksmontageanordnung nach einem der vorstehenden Ansprüche, wobei sich die Schenkel (128) voneinander in einem Winkel von 15° bis 25° weg erstrecken.

7. Gasturbinentriebwerksmontageanordnung nach einem der vorstehenden Ansprüche, wobei der Adapterring (110) an dem mindestens einen Schubgestänge (120) über dem Gasturbinentriebwerk (104) an einer ersten axialen Stelle (P3) montiert ist und der Adapterring (110) an dem Gasturbinentriebwerk (104) unter dem Gasturbinentriebwerk (104) an einer zweiten axialen Stelle (P4) montiert ist, die sich hinter der ersten axialen Stelle (P3) befindet.

8. Gasturbinentriebwerksmontageanordnung nach Anspruch 7, wobei das Gasturbinentriebwerk (104) Folgendes umfasst:
einen Fan (42) und ein Fangehäuse (140), das den Fan (42) umgibt;
ein Band (142) an einem äußeren Umfang des Fangehäuses (140); und
eine Fronthalterung (144), die die Funktion hat, um eine Unterseite des Bands (142) an dem Luftfahrzeug (100) an einer dritten axialen Stelle (P1) montiert zu werden, die vor der ersten und der zweiten axialen Stelle (P3, P4) liegt.

9. Gasturbinentriebwerksmontageanordnung nach einem der vorstehenden Ansprüche, wobei das mindestens eine Schubgestänge (120) ein Paar Schubgestänge (120A, 120B) umfasst, die voneinander beabstandet sind, das zweite Ende (123A, 123B) jedes Schubgestänges (120A, 120B) an entgegengesetzten Enden (162A, 162B) eines Zugbaums (160) montiert ist, wobei der Zugbaum (160) einen mittleren Durchgang (172) zwischen seinen gegenüberliegenden Enden (162A, 162B) umfasst, wobei der Zugbaum (160) schwenkbar an dem Adapterring (110) durch seinen mittleren Durchgang (172) montiert ist.

10. Luftfahrzeug (100), umfassend:
einen Rumpf (102); und
die Gasturbinentriebwerksmontageanordnung nach einem der Ansprüche 1 bis 8, wobei das Gasturbinentriebwerk (104) über dem Rumpf (102) montiert ist, der Adapterring (110) an dem Rumpf (102) unter dem Gasturbinentriebwerk (104) montiert ist und das mindestens eine Schubgestänge (120) ein Paar Schubgestänge (120A, 120B) umfasst, die voneinander beabstandet sind.

11. Luftfahrzeug (100) nach Anspruch 10, wobei die Gasturbinentriebwerksmontageanordnung einen Zugbaum (160) umfasst, der gegenüberliegende Enden (162A, 162B) aufweist, wobei jedes gegenüberliegende Ende (162A, 162B) an dem zweiten Ende (123A, 123B) eines jeweiligen der Schubgestänge (120A, 120B) montiert ist, wobei der Zugbaum (160) einen mittleren Durchgang (172) zwischen seinen gegenüberliegenden Enden (162A, 162B) umfasst und der Zugbaum (160) schwenkbar an dem Adapterring (110) durch den mittleren Durchgang (172) montiert ist.

## Revendications

1. Agencement de montage de moteur à turbine à gaz comprenant :
un moteur à turbine à gaz (104) ;
un anneau d'adaptateur (110) s'étendant de manière circonférentielle autour du moteur à turbine à gaz (104) et monté à la fois sur le moteur à turbine à gaz (104) et sur un aéronef (100) sous le moteur à turbine à gaz (104) ; et
au moins un palier de poussée (120) comprenant une première extrémité (122) montée sur le moteur à turbine à gaz (104) à l'avant de l'anneau d'adaptateur (110), et une seconde extrémité opposée (123) montée sur l'anneau d'adaptateur (110) au-dessus du moteur à turbine à gaz (104) ;
**caractérisé en ce que** l'anneau d'adaptateur (110) comprend une plaque de montage (112) située sous le moteur à turbine à gaz (104) qui permet de monter l'anneau d'adaptateur (110) sur l'aéronef (100), et des supports de structure en A (127) respectifs situés sur des côtés opposés du moteur à turbine à gaz (104), chaque support de structure en A (127) comprenant des pieds (128) munis de premières extrémités qui s'étendent l'une vers l'autre et vers un sommet du moteur à turbine à gaz (104), et des secondes extrémités opposées qui s'étendent en s'éloignant l'une de l'autre et vers un fond du moteur à turbine à gaz (104), dans lequel les secondes extrémités des pieds (128) rejoignent la plaque de montage (112).

2. Agencement de montage de moteur à turbine à gaz selon la revendication 1, dans lequel la première extrémité (122) de l'au moins un palier de poussée (120) est montée de manière pivotante sur le moteur à turbine à gaz (104), et la seconde extrémité (123) de l'au moins un palier de poussée (120) est montée de manière pivotante sur l'anneau d'adaptateur (110).

3. Agencement de montage de moteur à turbine à gaz selon la revendication 1 ou 2, dans lequel la seconde extrémité (123) de l'au moins un palier de poussée (120) est située radialement vers l'extérieur de la première extrémité (122) de l'au moins un palier de poussée (120).

4. Agencement de montage de moteur à turbine à gaz selon la revendication 1, 2 ou 3, dans lequel chaque support de structure en A (127) comprend une ouverture triangulaire (130) entre ses pieds (128) et la plaque de montage (112).

5. Agencement de montage de moteur à turbine à gaz selon une quelconque revendication précédente, dans lequel les supports de structure en A (127) respectifs s'incurvent de manière circonférentielle le long d'une surface extérieure du moteur à turbine à gaz (104).

6. Agencement de montage de moteur à turbine à gaz selon une quelconque revendication précédente, dans lequel les pieds (128) s'étendent à l'opposé l'un de l'autre à un angle compris entre 15° et 25°.

7. Agencement de montage de moteur à turbine à gaz selon une quelconque revendication précédente, dans lequel l'anneau d'adaptateur (110) est monté sur l'au moins un palier de poussée (120) au-dessus du moteur à turbine à gaz (104) au niveau d'un premier emplacement axial (P3), et l'anneau d'adaptateur (110) est monté sur le moteur à turbine à gaz (104) sous le moteur à turbine à gaz (104) au niveau d'un deuxième emplacement axial (P4) qui se trouve à l'arrière du premier emplacement axial (P3) .

8. Agencement de montage de moteur à turbine à gaz selon la revendication 7, le moteur à turbine à gaz (104) comprenant :
une soufflante (42) et un carter de soufflante (140) entourant la soufflante (42) ;
une bande (142) sur une périphérie extérieure du carter de soufflante (140) ; et
un montage avant (144) pouvant être utilisé pour monter un fond de la bande (142) sur l'aéronef (100) au niveau d'un troisième emplacement axial (P1) qui est à l'avant du premier et du deuxième emplacements axiaux (P3, P4).

9. Agencement de montage de moteur à turbine à gaz selon une quelconque revendication précédente, dans lequel l'au moins un palier de poussée (120) comprend une paire de paliers de poussée (120A, 120B) qui sont espacés l'un de l'autre, la seconde extrémité (123A, 123B) de chaque palier de poussée (120A, 120B) étant montée sur des extrémités opposées (162A, 162B) d'un palonnier (160), le palonnier (160) comprenant un passage central (172) entre ses extrémités opposées (162A, 162B), le palonnier (160) étant monté de manière pivotante sur l'anneau d'adaptateur (110) à travers son passage central (172).

10. Aéronef (100) comprenant :
un fuselage (102) ; et
l'agencement de montage de moteur à turbine à gaz selon l'une quelconque des revendications 1 à 8, dans lequel le moteur à turbine à gaz (104) est monté au-dessus dudit fuselage (102), l'anneau d'adaptateur (110) est monté sur le fuselage (102) sous le moteur à turbine à gaz (104), et l'au moins un palier de poussée (120) comprend une paire de paliers de poussée (120A, 120B) qui sont espacés l'un de l'autre.

11. Aéronef (100) selon la revendication 10, dans lequel l'agencement de montage de moteur à turbine à gaz comprend un palonnier (160) muni d'extrémités opposées (162A, 162B), chaque extrémité opposée (162A, 162B) étant montée sur la seconde extrémité (123A, 123B) d'un palier de poussée respectif parmi les paliers de poussée (120A, 120B), le palonnier (160) comprenant un passage central (172) entre ses extrémités opposées (162A, 162B), et le palonnier (160) étant monté de manière pivotante sur l'anneau d'adaptateur (110) à travers le passage central (172).
